# EUROPÄISCHE PATENTSCHRIFT

(11) **EP 3 320 025 B1**
(45) Veröffentlichungstag und Bekanntmachung des Hinweises auf die Patenterteilung: **10.04.2019**
(21) Anmeldenummer: 16736141.9
(22) Anmeldetag: 06.07.2016
(51) Int. Cl.: C08G 69/48

(54) **VERNETZUNG VON POLYAMIDEN IN DER SCHMELZE**
CROSSLINKING OF POLYAMIDES IN THE MELT
RETICULATION DE POLYAMIDES DANS LA FONTE

(30) Priorität: 09.07.2015 EP 15176123
(43) Veröffentlichungstag der Anmeldung: 16.05.2018
(73) Patentinhaber: BASF SE, 67056 Ludwigshafen (DE)
(72) Erfinder: HABRAKEN, Gijsbrecht Jacobus Maria, 67061 Ludwigshafen (DE); SPRAFKE, Johannes Klaus, 67346 Speyer (DE); DA SILVA, Marion, 67061 Ludwigshafen (DE); BOHN, Martin Alexander, 68167 Mannheim (DE); CHARRAK, Monika, 67240 Bobenheim-Roxheim (DE)
(74) Vertreter: BASF IP Association
(86) Internationale Anmeldenummer: PCT/EP2016/066032
(87) Internationale Veröffentlichungsnummer: WO 2017/005814

(56) Entgegenhaltungen:
- US-A- 4 367 329
- US-A- 4 661 558
- US-A1- 2014 135 449
- MITIAKOUDIS ANASTASSIOS ET AL: "Synthesis and characterization of furanic polyamides", MACROMOLECULES, AMERICAN CHEMICAL SOCIETY, US, Bd. 24, Nr. 4, 1. Februar 1991 (1991-02-01), Seiten 830-835, XP009157490, ISSN: 0024-9297
- MITIAKOUDIS ANASTASSIOS ET AL: "Polyamides containing furanic moieties", POLYMER COMMUNICATIONS,, Bd. 26, Nr. 8, 1. Januar 1985 (1985-01-01) , Seiten 246-249, XP009157496, ISSN: 0263-6476

## Beschreibung

Die vorliegende Erfindung betrifft ein Verfahren zur Herstellung eines vernetzten Polyamids (vP), bei dem eine Schmelze (S), die mindestens ein Polyamid (P), das Furaneinheiten enthält, und mindestens ein Dienophil enthält, bei einer ersten Temperatur T₁ bereitgestellt wird und die Schmelze (S) anschließend auf eine zweite Temperatur T₂, die unterhalb der Schmelztemperatur T_{M} des mindestens einen Polyamids (P) liegt, abgekühlt wird unter Erhalt des vernetzten Polyamids (vP). Außerdem betrifft die vorliegende Erfindung ein vernetztes Polyamid (vP), erhältlich nach dem erfindungsgemäßen Verfahren.

Polyamide sind im Allgemeinen teilkristalline Polymere, die industriell von besonderer Bedeutung sind, da sie sich durch sehr gute mechanische Eigenschaften auszeichnen, insbesondere besitzen sie eine hohe Festigkeit, Steifigkeit und Zähigkeit, eine gute Chemikalienbeständigkeit sowie eine hohe Abriebfestigkeit und Kriechstromfestigkeit. Diese Eigenschaften sind insbesondere von Bedeutung für die Herstellung von Spritzgussteilen. Eine hohe Zähigkeit ist besonders wichtig für die Verwendung von Polyamiden als Verpackungsfolien. Aufgrund ihrer mechanischen Eigenschaften werden Polyamide industriell zur Herstellung von Textilien wie Angelschnüren, Kletterseilen und Teppichböden verwendet. Außerdem finden Polyamide Verwendung für die Herstellung von Dübeln, Schrauben und Kabelbindern. Darüber hinaus werden Polyamide als Lacke, Klebstoffe und Beschichtungsmaterialien eingesetzt.

Um mechanisch und chemisch besonders stabile Polyamide herzustellen, werden Polyamide beispielsweise vernetzt. Zur Vernetzung von Polyamiden werden im Stand der Technik verschiedene Methoden beschrieben.

Beispielsweise können bei der Herstellung von Polyamiden tri- oder höher funktionalisierte Monomere eingesetzt werden, wodurch die entstehenden Polyamide vernetzen. Nachteilig bei diesem Verfahren ist allerdings, dass die so hergestellten vernetzten Polyamide nicht durch die üblichen Verarbeitungsmethoden wie Spritzguss und Extrusion weiterverarbeitet werden können, da die Polyamide durch Umamidierung beim Aufschmelzen weiter reagieren und sich dadurch ihre Eigenschaften verändern.

Eine weitere Variante, Polyamide zu vernetzen, besteht darin, Bauteile aus Polyamid nach deren Herstellung durch Gammastrahlung zu vernetzen. Nachteilig ist hierbei, dass die Vernetzung irreversibel erfolgt und die Polyamide daher nicht mehr weiterverarbeitet und beispielsweise umgeformt werden können. Außerdem erhöht der zusätzliche Verabeitungsschritt die Kosten und den logistischen Aufwand.

Im Stand der Technik sind verschiedene Verfahren beschrieben, um Polymere, insbesondere Polyester sowie Polyamide, bereitzustellen, die reversibel vernetzt werden können, um deren Weiterverarbeitung sicherzustellen. Derartige Polymere werden auch als funktionale Polymere bezeichnet.

Beispielsweise können in die Seitenketten von Polymeren Diene und Dienophile eingebaut werden, die über eine Diels-Alder-Reaktion benachbarte Ketten miteinander verbinden und so vernetzen können.

Nachteilig bei der Verwendung von Dienen und Dienophilen in den Seitenketten eines Polymers ist einerseits, dass durch die Seitenketten die mechanischen Eigenschaften des Polymers verändert werden. Darüber hinaus wird durch die Seitenketten die Glasübergangstemperatur T_{G} des Polymers verändert und seine Kristallinität reduziert. Ein weiteres Problem bei der Verwendung von Dienen und Dienophilen nebeneinander in den Seitenketten der Polymere ist darin zu sehen, dass die Diene mit den Dienophilen unter Umständen ungewollte Reaktionen eingehen, beispielsweise bei Scherung, wodurch sich die Eigenschaften des Polymers verändern können. Darüber hinaus ist die Einführung von Dienen und Dienophilen in die Seitenketten häufig mit erhöhtem synthetischen Aufwand und damit höheren Kosten verbunden.

Es besteht daher Bedarf an Verfahren, die es ermöglichen, vernetzte Polymere, insbesondere vernetzte Polyamide, herzustellen, die die zuvor beschriebenen Nachteile nicht oder in vermindertem Maße aufweisen.

Die der vorliegenden Erfindung zugrundeliegende Aufgabe ist somit die Bereitstellung eines Verfahrens zur Herstellung von vernetzten Polyamiden, die die vorstehend beschriebenen Nachteile der Verfahren zur Herstellung von vernetzten Polyamiden gemäß dem Stand der Technik nicht oder in vermindertem Maße aufweisen. Das Verfahren soll zudem möglichst einfach und kostengünstig durchführbar sein.

Gelöst wird diese Aufgabe durch ein Verfahren zur Herstellung eines vernetzten Polyamids (vP), umfassend die Schritte
i) Bereitstellen einer Schmelze (S), die die Komponenten
   A) mindestens ein Polyamid (P) mit einer Schmelztemperatur T_{M}, das Dieneinheiten der allgemeinen Formel (I) 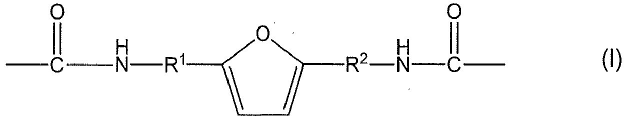 enthält, in der
      - R¹, R²: unabhängig voneinander ausgewählt sind aus C₁-C₁₀-Alkandiyl,
   B) mindestens ein Dienophil, das mindestens zwei Dienophileinheiten enthält, die gegenüber den in der Komponente A) enthaltenen Dieneinheiten reaktiv sind,
   enthält, bei einer ersten Temperatur T₁, die oberhalb der Schmelztemperatur T_{M} der Komponente A) liegt,
ii) Abkühlen der Schmelze (S) auf eine zweite Temperatur T₂, die unterhalb der Schmelztemperatur T_{M} der Komponente A) liegt, unter Erhalt des vernetzten Polyamids (vP).

Das erfindungsgemäße Verfahren zeichnet sich durch seine einfache Durchführbarkeit aus. Durch das erfindungsgemäße Verfahren kann gezielt der Vernetzungsgrad des erhaltenen vernetzten Polyamids (vP) gesteuert werden und damit die Eigenschaften des Materials sehr gezielt und kontolliert beeinflusst werden.

Da das erfindungsgemäße Verfahren in einer Schmelze durchgeführt wird, ist der Einsatz eines Lösungsmittels nicht erforderlich. Daher enthält das vernetzte Polyamid keine Verunreinigungen durch Lösungsmittel, was insbesondere vorteilhaft ist für die Weiterverarbeitung des vernetzten Polyamids (vP).

Da die Vernetzung des vernetzten Polyamids (vP) reversibel ist, kann das vernetzte Polyamid (vP) wieder aufgeschmolzen und beispielsweise umgeformt werden.

Das erfindungsgemäß hergestellte vernetzte Polyamid (vP) besitzt außerdem eine höhere Steifigkeit, insbesondere ein höheres E-Modul und eine höhere Streckspannung sowie eine höhere Bruchspannung als unvernetzte Polyamide.

Nachfolgend wird das erfindungsgemäße Verfahren näher erläutert.

### Schritt i)

In Schritt i) wird eine Schmelze, die als Komponente A) mindestens ein Polyamid (P) mit einer Schmelztemperatur T_{M} und als Komponente B) mindestens ein Dienophil enthält, bei einer ersten Temperatur T₁, die oberhalb der Schmelztemperatur T_{M} der Komponente A) liegt, bereitgestellt.

Die Schmelze (S) enthält üblicherweise im Bereich von 85 bis 99,5 Gew.-%, bevorzugt im Bereich von 90 bis 99 Gew.-% und insbesondere bevorzugt im Bereich von 95 bis 99 Gew.-% der Komponente A), bezogen auf die Summe der Gewichtsprozente der Komponenten A) und B), bevorzugt bezogen auf das Gesamtgewicht der Schmelze (S).

Üblicherweise enthält die Schmelze (S) im Bereich von 0,5 bis 15 Gew.-%, bevorzugt im Bereich von 1 bis 10 Gew.-% und insbesondere bevorzugt im Bereich von 1 bis 5 Gew.-% der Komponente B), jeweils bezogen auf die Summe der Gewichtsprozente der Komponenten A) und B), bevorzugt bezogen auf das Gesamtgewicht der Schmelze (S).

In einer erfindungsgemäßen Ausführungsform enthält die Schmelze (S) zusätzlich als Komponente C) mindestens einen Endgruppenregler.

Üblicherweise enthält die Schmelze (S) zusätzlich als Komponente C) im Bereich von 0 bis 2 Gew.-%, bevorzugt im Bereich von 0,1 bis 1,5 Gew.-% und insbesondere bevorzugt im Bereich von 0,2 bis 1 Gew.-% mindestens eines Endgruppenreglers, jeweils bezogen auf die Summe der Gewichtsprozente der in der Schmelze (S) enthaltenen Komponenten A), B) und C), bevorzugt bezogen auf das Gesamtgewicht der Schmelze (S).

Gegenstand der vorliegenden Erfindung ist somit auch ein Verfahren, bei dem die Schmelze (S) zusätzlich als Komponente C) im Bereich von 0 bis 2 Gew.-% mindestens eines Endgruppenreglers enthält, bezogen auf die Summe der Gew.-% der in der Schmelze (S) enthaltenen Komponenten A), B) und C).

In einer weiteren Ausführungsform enthält die Schmelze (S) zusätzlich als Komponente D) mindestens einen Radikalfänger.

Üblicherweise enthält die Schmelze (S) zusätzlich als Komponente D) im Bereich von 0,1 bis 5 Gew.-%, bevorzugt im Bereich von 0,2 bis 4 Gew.-% und insbesondere bevorzugt im Bereich von 0,5 bis 3 Gew.-% mindestens eines Radikalfängers, bezogen auf der Gesamtgewicht der in der Schmelze (S) enthaltenen Komponenten A), B), C) und D), bevorzugt bezogen auf das Gesamtgewicht der Schmelze (S).

Gegenstand der vorliegenden Erfindung ist somit auch ein Verfahren, bei dem die Schmelze (S) zusätzlich als Komponente D) im Bereich von 0,5 bis 5 Gew.-% mindestens eines Radikalfängers enthält, bezogen auf das Gesamtgewicht der in der Schmelze (S) enthaltenen Komponenten A), B), C) und D).

Die vorstehend angegebenen Gewichtsprozente beziehen sich auf die in der Schmelze (S) enthaltenen Komponenten A) und B) sowie gegebenenfalls C) und D), vorzugsweise auf das Gesamtgewicht der Schmelze (S). Enthält die Schmelze (S) nur die Komponenten A) und B), so beziehen sich die Gewichtsprozente auf die Summe der Gewichtsprozente der Komponenten A) und B). Enthält die Schmelze (S) zusätzlich die Komponente C), so beziehen sich die Gewichtsprozente auf die Summe der Gewichtsprozente der Komponenten A), B) und C). Enthält die Schmelze (S) zusätzlich die Komponente D), so beziehen sich die Gewichtsprozente auf die Summe der Gewichtsprozente der Komponenten A), B) und D). Enthält die Schmelze (S) zusätzlich beide Komponenten C) und D), so beziehen sich die Gewichtsprozente auf die Summe der Gewichtsprozente der Komponenten A), B), C) und D). Bevorzugt beziehen sich die Gewichtsprozente jeweils auf das Gesamtgewicht der Schmelze (S).

Sämtliche Gew.-%-Angaben, die sich auf die in der Schmelze (S) enthaltenen Komponenten A) und B) sowie gegebenenfalls C) und D) beziehen, beziehen sich soweit nicht anders angegeben auf die Schmelze (S) bevor eine Reaktion zwischen den Komponenten A) und B) sowie gegebenenfalls C) und D) stattfindet, insbesondere bevor in Schritt ii) das vernetzte Polymer (vP) erhalten wird.

Es versteht sich von selbst, dass, wenn die Schmelze (S) zusätzlich die Komponenten C) und D) enthält, die Schmelze (S) einen entsprechend geringeren Anteil an den Komponenten A) und B) enthält.

In einer erfindungsgemäßen Ausführungsform enthält die Schmelze (S) die Komponenten
A) mindestens ein Polyamid (P) mit einer Schmelztemperatur T_{M}, das Dieneinheiten der allgemeinen Formel (I) enthält,
B) mindestens ein Dienophil, das mindestens zwei Dienophileinheiten enthält, die gegenüber den in der Komponente A) enthaltenen Dieneinheiten reaktiv sind,
C) mindestens einen Endgruppenregler,
D) mindestens einen Radikalfänger.

In einer bevorzugten Ausführungsform enthält die Schmelze (S) von 83 bis 99 Gew.-%, bevorzugt von 89,5 bis 97,9 Gew.-% und insbesondere bevorzugt von 92 bis 97,8 Gew.-% der Komponente A), von 0,5 bis 10 Gew.-%, bevorzugt von 1 bis 8 Gew.-% und insbesondere bevorzugt von 1 bis 6 Gew.-% der Komponente B), von 0 bis 2 Gew.-%, bevorzugt von 0,1 bis 1,5 Gew.-% und insbesondere bevorzugt von 0,2 bis 1 Gew.-% der Komponente C) und von 0,1 bis 5 Gew.-%, bevorzugt von 0,2 bis 4 Gew.-% und insbesondere bevorzugt von 0,5 bis 3 Gew.-% der Komponente D), jeweils bezogen auf die Summe der Gewichtsprozente der Komponenten A) bis D), bevorzugt bezogen auf das Gesamtgewicht der Schmelze (S).

Gegenstand der vorliegenden Erfindung ist somit auch ein Verfahren, bei dem die Schmelze (S) die folgenden Komponenten enthält:
A) von 83 bis 99 Gew.-% der Komponente A),
B) von 0,5 bis 10 Gew.-% der Komponente B),
C) von 0 bis 2 Gew.-% mindestens eines Endgruppenreglers,
D) von 0,1 bis 5 Gew.-% mindestens eines Radikalfängers,
jeweils bezogen auf die Summe der Gew.-% der in der Schmelze (S) enthaltenen Komponenten A) bis D).

In einer Ausführungsform ist die Schmelze (S) im Wesentlichen frei von Lösungsmitteln. Die Lösungsmittel sind von den Komponenten A), B), C) und D) verschieden. Vorzugsweise ist die Schmelze (S) im Wesentlichen frei von Lösungsmitteln die ausgewählt sind aus der Gruppe bestehend aus Lactamen, Toluol, Hexafluorisopropanol, Tetrahydrofuran, Wasser, konzentrierten Säuren wie Schwefelsäure, Ameisensäure, Trifluoressigsäure, Chloressigsäure, aromatische Alkohole wie Phenylethylalkohol, Benzylalkohol, Phenole, aber auch Kresole, Glykole, Trifluorethanol und Mischungen daraus. Am meisten bevorzugt ist die Schmelze (S) im Wesentlichen frei von Lösungsmitteln, die geeignet sind, Polyamide zu lösen.

"Im Wesentlichen frei von Lösungsmitteln" bedeutet vorliegend, dass die Schmelze (S) weniger als 5 Gew.-%, vorzugsweise weniger als 2 Gew.-% und insbesondere bevorzugt weniger als 1 Gew.-% Lösungsmittel enthält, jeweils bezogen auf das Gesamtgewicht der Schmelze (S).

In Schritt i) wird die Schmelze (S) bei der ersten Temperatur T₁ bereitgestellt.

Die Schmelze (S) kann nach allen dem Fachmann bekannten Methoden bereitgestellt werden. Beispielsweise kann die Schmelze (S) bereitgestellt werden, indem die Komponenten A), B) sowie gegebenenfalls C) und D) gemeinsam aufgeschmolzen werden. Des Weiteren ist es möglich, dass zumindest eine der Komponenten A), B) oder gegebenenfalls C) oder D) aufgeschmolzen wird und die anderen Komponenten anschließend zugefügt werden. Beispielsweise kann zunächst die Komponente A) aufgeschmolzen werden und anschließend die Komponente B) sowie gegebenenfalls die Komponenten C) und D) zugeführt werden. Bevorzugt wird zunächst die Komponente A) aufgeschmolzen, dann gegebenenfalls die Komponenten C) und D) zugegeben und schließlich die Komponente B) zugeführt.

Die Schmelze (S) kann in allen Gefäßen bereitgestellt werden, die auf die erste Temperatur T₁ geheizt werden können und die zur Aufbewahrung von Flüssigkeiten, insbesondere von Polymerschmelzen, geeignet sind. Geeignete Reaktoren sind beispielsweise Rührkesselreaktoren, Knetreaktoren oder Extruder. Bevorzugt wird die Schmelze (S) in einem Extruder bereitgestellt.

Extruder als solche sind dem Fachmann bekannt. Der Extruder kann beispielsweise statische und/oder dynamische Mischorgane umfassen. Statische und dynamische Mischorgane sind dem Fachmann bekannt.

Die erste Temperatur T₁, bei der die Schmelze (S) in Schritt i) bereitgestellt wird, liegt oberhalb der Schmelztemperatur T_{M} der Komponente A). Üblicherweise liegt die erste Temperatur T₁ mindestens 1 °C, bevorzugt mindestens 5 °C und insbesondere bevorzugt mindestens 10 °C über der Schmelztemperatur T_{M} der Komponente A).

Unter "Schmelztemperatur T_{M}" wird die Temperatur verstanden, bei der bzw. oberhalb deren das Polyamid (P) vollständig in flüssigem Aggregatzustand vorliegt. Die Schmelztemperatur wird dabei in Reinsubstanz bestimmt. Die Schmelztemperatur T_{M} wird bestimmt durch dynamische Differenzkalorimetrie (differential scanning calorimetry; DSC) oder durch dynamisch-mechanische Thermoanalyse (DMTA) für semikristalline Polyamide. Für amorphe Polyamide ist T_{M} definiert als die Temperatur, bei der das Polyamid (P) (mit einer Mindeslösungsviskosität von 80 mL/g nach ISO307 in Schwefelsäure) mindestens eine Nullscherviskosität (zero shear viscosity) von 5000 Pa s aufweist und damit in der Schmelze verarbeitbar ist (gemessen auf einem Rotationsrheometer"DHR-1" der Firma TA-instruments, Platte-Platte Geometrie, Plattendurchmesser 25 mm und Probenhöhe 1,0 mm. Deformation 1,0 %, Vorheizzeit 1,5 min und Material vorher 7 Tage bei 80 °C im Vakuum getrocknet)

Die Komponente A) weist im Allgemeinen eine Zersetzungstemperatur auf, oberhalb der das mindestens eine Polyamid (P) zersetzt wird. Die erste Temperatur T₁ liegt üblicherweise mindestens 1 °C, bevorzugt mindestens 5 °C und insbesondere bevorzugt mindestens 10 °C unterhalb der Zersetzungstemperatur der Komponente A).

Unter "Zersetzungstemperatur" wird die Temperatur verstanden, bei der bzw. oberhalb der das Polyamid (P) durch thermische Spaltung einen Molekulargewichtsabbau zeigt. Die Zersetzungstemperatur wird dabei in Reinsubstanz bestimmt. Die Zersetzung kann durch thermischgravimetrische Analyse, Abnahme der Viskositätszahl oder Verfärbung des Polyamids (P) gemessen werden. Verfahren hierzu sind dem Fachmann bekannt.

Die erste Temperatur T₁ liegt üblicherweise im Bereich von 90 bis 380 °C, bevorzugt im Bereich von 160 bis 290 °C und insbesondere bevorzugt im Bereich von 190 bis 270 °C.

Gegenstand der vorliegenden Erfindung ist somit auch ein Verfahren, bei dem die erste Temperatur T₁ in Schritt i) im Bereich von 90 bis 380 °C liegt.

In der in Schritt i) bereitgestellten Schmelze (S) liegt die Komponente A) geschmolzen vor. Die Komponenten B) sowie gegebenenfalls C) und D) liegen in der Komponente A) gelöst vor. Die Komponenten B) sowie gegebenenfalls C) und D) können ebenfalls geschmolzen vorliegen und in der Komponente A) gelöst sein.

Nachfolgend werden die in der Schmelze (S) enthaltenen Komponenten näher beschrieben.

### Komponente A)

Als Komponente A) enthält die Schmelze (S) mindestens ein Polyamid (P) mit einer Schmelztemperatur T_{M}, enthaltend Furaneinheiten als wiederholende Einheiten der allgemeinen Formel (I) 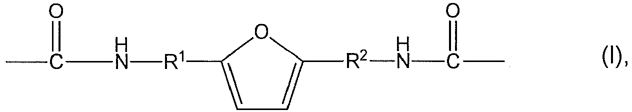 worin R¹ und R² die oben beschriebenen Bedeutungen haben.

Die Furaneinheiten als wiederholende Einheiten der allgemeinen Formel (I) sind bevorzugt in der Hauptkette des mindestens einen Polyamids (P) enthalten. Insbesondere bevorzugt enthält das mindestens eine Polyamid (P) keine Seitenketten, die Furaneinheiten als wiederholende Einheiten der allgemeinen Formel (I) enthalten, am meisten bevorzugt enthält das mindestens eine Polyamid (P) keine Seitenketten. Das mindestens eine Polyamid (P) ist also am meisten bevorzugt mindestens ein lineares Polyamid (P).

Die Furaneinheiten werden auch als Dieneinheiten bezeichnet. Diese Begriffe werden erfindungsgemäß synonym gebraucht.

In einer bevorzugten Ausführungsform haben R¹ und R² der allgemeinen Formel (I) die folgende Bedeutung.

R¹, R² sind unabhängig voneinander ausgewählt aus C₁-C₄-Alkandiyl,
bevorzugt sind R¹, R² dasselbe C₁-C₄-Alkandiyl,
am meisten bevorzugt sind in der allgemeinen Formel (I) R¹, R² beide Methylen.

Unter "C₁-C₁₀-Alkandiyl" wie beispielsweise oben für R¹ und R² für das mindestens eine Polyamid (P) der allgemeinen Formel (I) beschrieben, wird im Rahmen der vorliegenden Erfindung ein Kohlenwasserstoff mit 1 bis 10 Kohlenstoffatomen und zwei freien Valenzen verstanden. Es handelt sich also um ein Biradikal mit 1 bis 10 Kohlenstoffatomen. "C₁-C₁₀-Alkandiyl" umfasst sowohl lineare als auch zyklische sowie gesättigte und ungesättigte Kohlenwasserstoffe mit 1 bis 10 Kohlenstoffatomen und zwei freien Valenzen. Kohlenwasserstoffe mit einem zyklischen und einem linearen Anteil fallen ebenfalls unter den Begriff "C₁-C₁₀-Alkandiyl". Beispiele für C₁-C₁₀-Alkandiyle sind Methylen, Ethylen (Ethan-1,2-Diyl, Dimethylen), Propan-1,3-Diyl (Trimethylen), Propylen (Propan-1,2-Diyl) und Butan-1,4-Diyl (Tetramethylen). Entsprechende Ausführungen gelten für "C₁-C₄-Alkandiyl".

Unter "mindestens ein Polyamid (P)" wird im Rahmen der vorliegenden Erfindung sowohl genau ein Polyamid (P) als auch eine Mischung aus zwei oder mehr Polyamiden (P) verstanden.

Das mindestens eine Polyamid (P) kann nach allen dem Fachmann bekannten Methoden hergestellt werden.

In einer bevorzugten Ausführungsform wird das mindestens eine Polyamid (P) hergestellt durch Polymerisation aus einer Reaktionsmischung (RM) bei einer Reaktionstemperatur T_{R}, wobei die Reaktionsmischung (RM) die folgenden Komponenten enthält.
A1) mindestens ein Lactam
A2) mindestens ein Diamin der allgemeinen Formel (II) 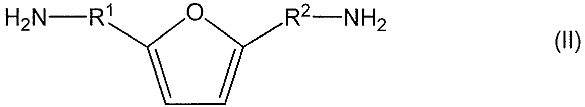 in der
   - R¹, R²: unabhängig voneinander ausgewählt sind aus C₁-C₁₀-Alkandiyl,
A3) mindestens ein Dicarbonsäurederivat ausgewählt aus der Gruppe bestehend aus einer Dicarbonsäure der allgemeinen Formel (III), einem Dicarbonsäureester der allgemeinen Formel (IV) und einem Dinitril der allgemeinen Formel (V)

   HOOC-R³-COOH (III)

   R⁵OOC-R⁴-COOR⁶ (IV)

   NC-R⁷-CN (V)

   in denen
   - R³, R⁴, R⁷: unabhängig voneinander ausgewählt sind aus der Gruppe bestehend aus einer Bindung, unsubstituiertem oder zumindest monosubstituiertem C₁-C₄₀-Alkandiyl und unsubstituiertem oder zumindest monosubstituiertem C₆-C₄₀-Arylen, wobei
   die Substituenten ausgewählt sind aus der Gruppe bestehend aus F, Cl, Br, I, OR⁸, C₁-C₁₀-Alkyl und C₆-C₁₀-Aryl, wobei

   - R⁸: ausgewählt ist aus der Gruppe bestehend aus H und C₁-C₁₀-Alkyl;

   - R⁵, R⁶: unabhängig voneinander ausgewählt sind aus der Gruppe bestehend aus unsubstituiertem oder zumindest monosubstituiertem C₁-C₂₀-Alkyl, unsubstituiertem oder zumindest monosubstituiertem C₆-C₂₀-Aryl und unsubstituiertem oder zumindest monosubstituiertem C₆-C₂₀-Aralkyl, wobei
   die Substituenten ausgewählt sind aus der Gruppe bestehend aus F, Cl, Br, I, OR⁹ und C₁-C₁₀-Alkyl, wobei
   - R⁹: ausgewählt ist aus der Gruppe bestehend aus H und C₁-C₁₀-Alkyl; und
A4) Wasser.

Die Reaktionsmischung (RM) enthält als Komponente A1) mindestens ein Lactam, als Komponente A2) mindestens ein Diamin (II), als Komponente A3) mindestens ein Dicarbonsäurederivat, ausgewählt aus der Gruppe bestehend aus einer Dicarbonsäure (III), einem Dicarbonsäureester (IV) und einem Dinitril (V), als Komponente A4) Wasser und optional als Komponente A5) von 0 bis 5 Gew.-% mindestens einen Endgruppenreglers, bezogen auf das Gesamtgewicht der Komponenten A1) bis A5).

In einer Ausführungsform der vorliegenden Erfindung enthält die Reaktionsmischung (RM) als Komponente A1) im Bereich von 26 bis 98 Gew.-% mindestens eines Lactams, als Komponente A2) im Bereich von 0,5 bis 35 Gew.-% mindestens eines Diamins (II), als Komponente A3) im Bereich von 0,5 bis 30 Gew.-% mindestens eines Dicarbonsäurederivats, als Komponente A4) im Bereich von 1 bis 30 Gew.-% Wasser und als Komponente A5) im Bereich von 0 bis 1 Gew.-% mindestens eines Endgruppenreglers, wobei die Gewichtsprozent jeweils bezogen sind auf das Gesamtgewicht der Komponenten A1) bis A4) bzw. bezogen auf das Gesamtgewicht der Komponenten A1) bis A5), für den Fall, dass die Reaktionsmischung (RM) die Komponente A5) enthält.

Erfindungsgemäß beziehen sich die Gew.-%-Angaben der Komponenten A1), A2), A3), A4) sowie optional der Komponente A5) auf das Gesamtgewicht der in der Reaktionsmischung (RM) enthaltenen Komponenten A1), A2), A3), A5) sowie optional der Komponente A5).

Für den Fall, dass die Komponente A5) in der Reaktionsmischung (RM) nicht enthalten ist, beziehen sich die Gew.-%-Angaben der Komponenten A1), A2), A3) und A4) auf das Gesamtgewicht der in der Reaktionsmischung (RM) enthaltenen Komponenten A1), A2), A3) und A4).

Für den Fall, dass die Komponente A5) in der Reaktionsmischung (RM) enthalten ist, beziehen sich die Gew.-%-Angaben der Komponenten A1), A2), A3), A4) und A5) auf das Gesamtgewicht der in der Reaktionsmischung (RM) enthaltenen Komponenten A1), A2), A3), A4) und A5).

In einer bevorzugten Ausführungsform beziehen sich die Gew.-%-Angaben der Komponenten A1), A2), A3), A4) sowie optional der Komponente A5) auf das Gesamtgewicht der Reaktionsmischung (RM).

In einer Ausführungsform der vorliegenden Erfindung enthält die Reaktionsmischung (RM) somit
26 bis 98 Gew.-% der Komponente A1),
0,5 bis 35 Gew.-% der Komponente A2),
0,5 bis 30 Gew.-% der Komponente A3) und
1 bis 30 Gew.-% der Komponente A4),
wobei die Gewichtsprozent jeweils bezogen sind auf das Gesamtgewicht der Komponenten A1) bis A4) bzw. bezogen auf das Gesamtgewicht der Komponenten A1) bis A5), bevorzugt bezogen auf das Gesamtgewicht der Reaktionsmischung (RM).

In einer bevorzugten Ausführungsform der vorliegenden Erfindung enthält die Reaktionsmischung (RM)
50 bis 89 Gew.-% der Komponente A1),
5 bis 25 Gew.-% der Komponente A2),
5 bis 25 Gew.-% der Komponente A3),
1 bis 20 Gew.-% der Komponente A4) und
0,1 bis 0,9 Gew.-% der Komponente A5),
wobei die Gewichtsprozent jeweils bezogen sind auf das Gesamtgewicht der Komponenten A1) bis A5), bevorzugt bezogen auf das Gesamtgewicht der Reaktionsmischung (RM).

In einer besonders bevorzugten Ausführungsform der vorliegenden Erfindung enthält die Reaktionsmischung (RM) somit
75 bis 82 Gew.-% der Komponente A1),
8 bis 12 Gew.-% der Komponente A2),
8 bis 13 Gew.-% der Komponente A3),
1 bis 5 Gew.-% der Komponente A4) und
0,1 bis 0,75 Gew.-% der Komponente A5),
wobei die Gewichtsprozent jeweils bezogen sind auf das Gesamtgewicht der Komponenten A1) bis A5), bevorzugt bezogen auf das Gesamtgewicht der Reaktionsmischung (RM).

Die Summe der Gewichtsprozente der Komponenten A1) bis A5) addiert sich im Allgemeinen zu 100 Gew.-%.

Sämtliche Gewichtsprozentangaben der Komponenten A1) bis A5) beziehen sich, soweit nicht anders angegeben, auf die Zusammensetzung der Reaktionsmischung (RM) vor Beginn der Polymerisation. Unter der "Zusammensetzung der Reaktionsmischung (RM) vor Beginn der Polymerisation" wird im Rahmen der vorliegenden Erfindung die Zusammensetzung der Reaktionsmischung (RM) verstanden bevor die in der Reaktionsmischung (RM) enthalten Komponenten A1) bis A5) miteinander zu reagieren beginnen, bevor also die Polymerisation einsetzt. Die in der Reaktionsmischung (RM) enthalten Komponenten A1) bis A5) liegen dann also noch in ihrer unreagierten Form vor. Es versteht sich von selbst, dass die in der Reaktionsmischung (RM) enthaltenen Komponenten A1) bis A5) während der Polymerisation zumindest teilweise miteinander reagieren und sich daher das Verhältnis der Komponenten A1) bis A5) untereinander ändert, ebenso wie sich die in der Reaktionsmischung (RM) enthaltenen Komponenten A1) bis A5) während der Polymerisation ändern. Dem Fachmann sind diese Reaktionen bekannt.

Unter Lactam werden erfindungsgemäß zyklische Amide verstanden, die im Ring 3 bis 12 Kohlenstoffatome, bevorzugt 6 bis 12 Kohlenstoffatome aufweisen. Geeignete Lactame sind beispielsweise ausgewählt aus der Gruppe bestehend aus 3-Aminopropansäurelactam (β-Lactam; β-Propiolactam), 4-Aminobutansäurelactam (y-Lactam; γ-Butyrolactam), 5-Aminopentansäurelactam (δ-Lactam; δ-Valerolactam), 6-Aminohexansäurelactam (ε-Lactam; ε-Caprolactam), 7-Aminoheptansäurelactam (ζ-Lactam; ζ-Heptanolactam), 8-Aminooktansäurelactam (η-Lactam; η-Oktanolactam), 9-Nonansäurelactam (θ-Lactam; θ-Nonanolactam), 10-Dekansäurelactam (ω-Dekanolactam), 11-Undekansäurelactam (ω-Undekanolactam) und 12-Dodekansäurelactam (ω-Dodekanolactam).

Die Lactame können unsubstituiert oder zumindest monosubstituiert sein. Für den Fall, dass zumindest monosubstituierte Lactame eingesetzt werden, können diese an den Kohlenstoffatomen des Rings einen, zwei oder mehrere Substituenten tragen, die unabhängig voneinander ausgewählt sind aus der Gruppe bestehend aus C₁- bis C₁₀-Alkyl, C₅- bis C₆-Cycloalkyl und C₅- bis C₁₀-Aryl.

Als C₁- bis C₁₀-Alkylsubstituenten sind beispielsweise Methyl, Ethyl, Propyl, Isopropyl, n-Butyl, sec.-Butyl und tert.-Butyl geeignet. Ein geeigneter C₅- bis C₆-Cycloalkylsubstituent ist beispielsweise Cyclohexyl. Bevorzugte C₅- bis C₁₀-Arylsubstituenten sind Phenyl und Anthranyl.

Bevorzugt werden unsubstituierte Lactame eingesetzt, wobei 12-Dodekansäurelactam (ω-Dodekanolactam) und ε-Lactam (ε-Caprolactam) bevorzugt sind. Besonders bevorzugt ist ε-Lactam (ε-Caprolactam).

ε-Caprolactam ist das zyklische Amid der Capronsäure. Es wird auch als 6-Aminohexansäurelactam, 6-Hexanlactam oder Caprolactam bezeichnet. Sein IUPAC-Name lautet "Acepan-2-one". Caprolactam besitzt die CAS-Nummer 105-60-2 und die allgemeine Formel C₆H₁₁NO. Verfahren zur Herstellung von Caprolactam sind dem Fachmann als solche bekannt.

In einer bevorzugten Ausführungsform ist Komponente A2) mindestens ein Diamin (II) worin R¹, R² unabhängig voneinander ausgewählt sind aus C₁-C₄-Alkandiyl.

Besonders bevorzugt ist Komponente A2) mindestens ein Diamin (II) worin R¹, R² dasselbe C₁-C₄-Alkandiyl sind.

Insbesondere bevorzugt ist Komponente A2) mindestens ein Diamin (II) worin R¹, R² beide Methylen sind.

Wenn R¹ und R² beide Methylen sind, so ist das Diamin (II) 2,5-Bis(aminomethyl)furan. 2,5-Bis(aminomethyl)furan hat die CAS-Nummer 2213-51-6.

Die Reaktionsmischung (RM) kann in einer Ausführungsform außerdem noch mindestens ein weiteres Diamin (Komponente A2')) enthalten.

Geeignete weitere Diamine (Komponente A2')) sind dem Fachmann als solche bekannt. Es versteht sich von selbst, dass das mindestens eine weitere Diamin (Komponente A2')) von der Komponente A2), dem Diamin (II), verschieden ist. Bevorzugt ist das mindestens eine weitere Diamin ausgewählt aus Alkandiaminen mit 4 bis 36 Kohlenstoffatomen, insbesondere Alkandiaminen mit 6 bis 12 Kohlenstoffatomen sowie aromatischen Diaminen. Besonders bevorzugt ist das mindestens eine weitere Diamin ausgewählt aus der Gruppe bestehend aus 1,4-Butandiamin, 1,5-Pentandiamin, 1,6-Hexamethylendiamin, 1,7-Heptamethylendiamin, 1,8-Octamethylendiamin, 1,9-Nonandiamin, 1,10-Decandiamin, 1,11-Undecandiamin, 1,12-Dodecandiamin, 1,13-Tridecandiamin, 1,14-Tetradecandiamin, 1,15-Pentadecandiamin, 1,16-Hexadecandiamin, 1,17-Heptadecandiamin, 1,18-Octadecandiamin, C36-Dimerdiamin, Bis-(4-amino-3-methylcyclohexyl)-methan (MACM), 4,4-Methylen-bis(cyclohexylamin) (PACM), Bis-(4-amino-3-ethyl-cyclohexyl)-methan (EACM), Bis-(4-Amino-3,5-dimethyl-cyclohexyl)methan (TMACM), Isophorondiamin, m-Xylylendiamin, p-Xylylendiamin, 2,5-bis(methylamino)tetrahydrofuran, 2,2-Di-(4-aminophenyl)-propan, 2,2-Di-(4-aminocyclohexyl)-propan, 2,4,4-Trimethylhexamethylendiamin und 1,5-Diamino-2-methyl-pentan.

In einer bevorzugten Ausführungsform haben die Substituenten der Komponente A3) in der Formel (III), der Formel (IV) und der Formel (V) die folgende Bedeutung:
- R³, R⁴, R⁷: sind unabhängig voneinander ausgewählt aus der Gruppe bestehend aus einer Bindung, unsubstituiertem C₁-C₃₆-Alkandiyl und C₆-C₂₀-Arylen;
- R⁵, R⁶: sind unabhängig voneinander ausgewählt aus der Gruppe bestehend aus unsubstituiertem C₁-C₁₀-Alkyl, C₆-C₁₀-Aryl und C₆-C₁₂-Aralkyl.

In einer insbesondere bevorzugten Ausführungsform haben die Substituenten in der Formel (III), der Formel (IV) und der Formel (V) die folgende Bedeutung:
- R³, R⁴, R⁷: sind unabhängig voneinander ausgewählt aus der Gruppe bestehend aus einer Bindung, unsubstituiertem C₁-C₁₂-Alkandiyl und C₆-C₁₀-Arylen;
- R⁵, R⁶: sind unabhängig voneinander ausgewählt aus der Gruppe bestehend aus unsubstituiertem C₁-C₄-Alkyl, C₁-C₁₀-Aryl und C₁-C₁₂-Aralkyl.

Unter "C₁-C₄₀-Alkandiyl", wie es beispielsweise in Formel (III) für R³ beschrieben wurde, wird im Rahmen der vorliegenden Erfindung ein Kohlenwasserstoff mit zwei freien Valenzen und von 1 bis 40 Kohlenstoffatomen verstanden. Anders ausgedrückt ist ein C₁-C₄₀-Alkandiyl ein Biradikal mit 1 bis 40 Kohlenstoffatomen. "C₁-C₄₀-Alkandiyl" umfasst sowohl lineare als auch zyklische sowie gesättigte und ungesättigte Kohlenwasserstoffe mit 1 bis 40 Kohlenstoffatomen und zwei freien Valenzen. Kohlenwasserstoffe, die sowohl eine lineare als auch eine zyklische Komponente aufweisen, fallen ebenfalls unter den Begriff. Entsprechende Ausführungen gelten für C₁-C₃₆-Alkandiyl und C₁-C₁₂-Alkandiyl.

"C₆-C₄₀-Arylen" bezeichnet einen aromatischen Kohlenwasserstoff mit zwei freien Valenzen und von 6 bis 40 Kohlenstoffatomen. Anders ausgedrückt bezeichnet "C₆-C₄₀-Arylen" ein aromatisches Biradikal mit 6 bis 40 Kohlenstoffatomen. Ein C₆-C₄₀-Arylen weist also ein aromatisches Ringsystem auf. Dieses Ringsystem kann monozyklisch, bizyklisch oder polyzyklisch sein. Entsprechende Ausführungen gelten für C₆-C₂₀-Arylen und C₆-C₁₀-Arylen.

"C₁-C₂₀-Alkyl" bezeichnet gesättigte und ungesättigte Kohlenwasserstoffe mit einer freien Valenz (Radikal) und von 1 bis 20 Kohlenstoffatomen. Die Kohlenwasserstoffe können linear, verzweigt oder zyklisch sein. Ebenso ist es möglich, dass sie eine zyklische und eine lineare Komponente enthalten. Beispiele für Alkylgruppen sind Methyl, Ethyl, n-Propyl, Isopropyl, n-Butyl, Isobutyl, sec-Butyl, tert-Butyl, Hexyl und Cyclohexyl. Entsprechende Ausführungen gelten auch für C₁-C₁₀-Alkyl.

"C₆-C₂₀-Aryl" bezeichnet das Radikal eines aromatischen Kohlenwasserstoffs mit 6 bis 20 Kohlenstoffatomen. Ein Aryl weist also ein aromatisches Ringsystem auf. Dieses Ringsystem kann monozyklisch, bizyklisch oder polyzyklisch sein. Beispiele für Arylgruppen sind Phenyl und Naphthyl wie beispielsweise 1-Naphtyl und 2-Naphtyl.

"C₆-C₂₀-Aralkyl" bedeutet vorliegend, dass der Substituent ein Alkyl ist, das wiederum durch ein Aryl substituiert ist. Anders ausgedrückt beschreibt Aralkyl ein Alkandiyl, das durch ein Arvlradikal substituiert ist. Ein C₆-C₂₀-Aralkyl ist ein Aralkyl, das 6 bis 20 Kohlenstoffatome enthält. Das Arylradikal kann beispielsweise ein Aryl sein wie oben definiert. Beispiele für Aralkyl sind beispielsweise Phenylmethyl (Benzyl) oder Phenylethyl.

In einer weiteren bevorzugten Ausführungsform ist das mindestens eine Dicarbonsäurederivat (Komponente A3)) ausgewählt aus der Gruppe bestehend aus einer Dicarbonsäure der allgemeinen Formel (III) und einem Dicarbonsäureester der allgemeinen Formel (IV).

Für die Dicarbonsäure (III) und den Dicarbonsäureester (IV) gelten die zuvor beschriebenen Ausführungen und Bevorzugungen.

In einer weiteren bevorzugten Ausführungsform ist die Dicarbonsäure (III) ausgewählt aus der Gruppe bestehend aus Oxalsäure (Ethandisäure), Malonsäure (Propandisäure), Bernsteinsäure (Butandisäure), Glutarsäure (Pentandisäure), Adipinsäure (Hexandisäure), Pimelinsäure (Heptandisäure), Korksäure (Octandisäure), Azelainsäure (Nonandisäure), Sebacinsäure (Decandisäure), 1,11-Undecandisäure, 1,12-Dodecandisäure, 1,13-Tridecandisäure, 1,14-Tetradecandisäure, 1,15-Pentadecandisäure, 1,16-Hexadecandisäure, 1,17-Heptadecandisäure, 1,18-Octadecandisäure, 1,3-Cyclohexandicarbonsäure, 1,4-Cyclohexandicarbonsäure, Isophthalsäure, Terephthalsäure, Naphtalendicarbonsäure, C36-Dimersäure, 2,5-Tetrahydrofurandicarbonsäure, 2,5-Furandicarbonsäure, 5-Sulfoisophtalsäure-mono-Natriumsalz und 5-Sulfoisophtalsäure-mono-Lithiumsalz.

In einer weiteren insbesondere bevorzugten Ausführungsform ist die Dicarbonsäure (III) ausgewählt aus der Gruppe bestehend aus Adipinsäure (Hexandisäure), Pimelinsäure (Heptandisäure), Korksäure (Octandisäure), Azelainsäure (Nonandisäure), Sebacinsäure (Decandisäure), 1,11-Undecandisäure, 1,12-Dodecandisäure, 1,13-Tridecandisäure, 1,14-Tetradecandisäure, 1,15-Pentadecandisäure, 1,16-Hexadecandisäure, 1,17-Heptadecandisäure, 1,18-Octadecandisäure, 2,5-Tetrahydrofurandicarbonsäure, 1,3-Cyclohexandicarbonsäure, 1,4-Cyclohexandicarbonsäure, Isophthalsäure, Terephthalsäure, Naphtalendicarbonsäure und C36-Dimersäure.

Für den mindestens einen Endgruppenregler (Komponente A5)) gelten die weiter unten für die Komponente C) beschriebenen Ausführungen und Bevorzugungen.

Die Polymerisation aus der Reaktionsmischung (RM) kann nach allen dem Fachmann bekannten Methoden erfolgen. Bevorzugt erfolgt, die Polymerisation bei einer Reaktionstemperatur T_{R}, die oberhalb der Schmelztemperatur T_{M} des Polyamids (P) liegt. Beispielsweise liegt die Reaktionstemperatur T_{R} im Bereich von 190 bis 235 °C, bevorzugt im Bereich von 195 bis 230 °C und insbesondere bevorzugt im Bereich von 200 bis 220 °C.

Das mindestens eine Polyamid (P) (Komponente A)) weist im Allgemeinen eine Viskositätszahl von 30 bis 250 ml/g auf, bevorzugt von 90 bis 220 ml/g und insbesondere bevorzugt im Bereich von 100 bis 130 ml/g. Die Bestimmung der Viskositätszahl erfolgt in einer Lösung von 0,5 g Polyamid (P) in 100 ml einer 1 : 1 Mischung von Phenol und o-Dichlorbenzol.

Das gewichtsmittlere Molekulargewicht (M_{W}) des mindestens einen Polyamids (P) liegt üblicherweise im Bereich von 20 000 bis 150 000 g/mol, bevorzugt im Bereich von 30 000 bis 140 000 g/mol und insbesondere bevorzugt im Bereich von 35 000 bis 120 000 g/mol, bestimmt mittels Gelpermeationschromatographie (GPC) (size exclusion chromatography (SEC)). Als Lösungsmittel wurde Hexafluoroisopropanol (HFIP) verwendet.

Das zahlenmittlere Molekulargewicht (Mₙ) liegt üblicherweise im Bereich von 5 000 bis 75 000 g/mol, bevorzugt im Bereich von 15 000 bis 70 000 g/mol und insbesondere bevorzugt im Bereich von 17 500 bis 60 000 g/mol, bestimmt mittels Gelpermeationschromatographie (GPC) (size exclusion chromatography (SEC)). Als Lösungsmittel wurde Hexafluorisopropanol (HFIP) verwendet.

Die Schmelztemperatur T_{M} des mindestens einen Polyamids (P) liegt üblicherweise im Bereich von 80 bis 330 °C, bevorzugt im Bereich von 150 bis 250 °C und insbesondere bevorzugt im Bereich von 180 bis 230 °C, bestimmt durch dynamische Differenzkalorimetrie (differential scanning calorimetry; DSC) oder durch dynamisch-mechanische Thermoanalyse (DMTA) für semikristalline Polyamide. Für amorphe Polyamide ist T_{M} definiert als die Temperatur, bei der das Polyamid (P) (mit einer Mindeslösungsviskosität von 80 mL/g nach ISO307 in Schwefelsäure) mindestens eine Nullscherviskosität (zero shear viscosity) von 5000 Pa s aufweist und damit in der Schmelze verarbeitbar ist (gemessen auf einem Rotationsrheometer "DHR-1" der Firma TA-instruments, Platte-Platte Geometrie, Plattendurchmesser 25 mm und Probenhöhe 1,0 mm. Deformation 1,0 %, Vorheizzeit 1,5 min und Material vorher 7 Tage bei 80 °C im Vakuum getrocknet)..

Gegenstand der vorliegenden Erfindung ist somit auch ein Verfahren, bei dem die Schmelztemperatur T_{M} der Komponente A) im Bereich von 80 bis 330 °C liegt.

Die Komponente A) weist üblicherweise eine Glasübergangstemperatur T_{G} auf. Die Glasübergangstemperatur T_{G} des mindestens einen Polyamids (P) (Komponente A)) liegt üblicherweise im Bereich von 0 bis 150 °C, bevorzugt im Bereich von 20 bis 100 °C und insbesondere bevorzugt im Bereich von 40 bis 80 °C, bestimmt durch DSC.

Gegenstand der vorliegenden Erfindung ist somit auch ein Verfahren, bei dem die Glasübergangstemperatur T_{G} der Komponente A) im Bereich von 0 bis 150 °C liegt.

### Komponente B)

Erfindungsgemäß enthält die Schmelze (S) mindestens ein Dienophil, das mindestens zwei Dienophileinheiten enthält, die gegenüber den in der Komponente A) enthaltenen Dieneinheiten reaktiv sind.

"Mindestens ein Dienophil" bedeutet im Rahmen der vorliegenden Erfindung sowohl genau ein Dienophil als auch eine Mischung aus zwei oder mehr Dienophilen.

"Mindestens zwei Dienophileinheiten, die gegenüber den in der Komponente A) enthaltenen Dieneinheiten reaktiv sind" bedeutet, dass das mindestens eine Dienophil sowohl genau zwei Dienophileinheiten enthalten kann, ebenso kann es drei oder mehr Dienophileinheiten enthalten. Erfindungsgemäß bevorzugt enthält das mindestens eine Dienophil genau zwei Dienophileinheiten, die gegenüber den in der Komponente A) enthaltenen Dieneinheiten reaktiv sind.

Unter "Dienophileinheiten, die gegenüber den in der Komponente A) enthaltenen Dieneinheiten reaktiv sind" wird verstanden, dass die in dem Dienophil enthaltenen Dienophileinheiten mit den Dieneinheiten der Komponente A) in einer [4+2]-Cycloaddition reagieren können. Derartige Gruppen und die entsprechenden Dienophile sind dem Fachmann als solche bekannt. Die Dieneinheit der Komponente A) fungiert dabei als Dienkomponente, die 4 π-Elektronen zur [4+2]-Cycloaddition beisteuert. Die Dienophileinheit des Dienophils steuert 2 π-Elektronen zur [4+2]-Cycloaddition bei.

Jeweils eine Dieneinheit der Komponente A) geht somit mit jeweils einer Dienophileinheit der Komponente B) eine [4+2]-Cycloaddition ein.

Gegenstand der vorliegenden Erfindung ist somit auch ein Verfahren, bei dem in Schritt ii) die Komponente A) mit der Komponente B) in einer [4+2]-Cycloaddition reagiert, unter Erhalt des vernetzten Polyamids (vP).

Bevorzugt sind die in der Komponente B) enthaltenen mindestens zwei Dienophileinheiten, die gegenüber den in der Komponente A) enthaltenen Dieneinheiten (Furaneinheiten) reaktiv sind, unabhängig voneinander ausgewählt aus der Gruppe bestehend aus C=C-Doppelbindungen, C=O-Doppelbindungen und C=S-Doppelbindungen.

Gegenstand der vorliegenden Erfindung ist somit auch ein Verfahren, bei dem die in der Komponente B) enthaltenen mindestens zwei Dieneinheiten, die unabhängig voneinander ausgewählt sind aus der Gruppe bestehend aus C=C-Doppelbindungen, C=O-Doppelbindungen und C=S-Doppelbindungen.

In einer insbesondere bevorzugten Ausführungsform sind die in der Komponente B) enthaltenen mindestens zwei Dienophileinheiten C=C-Doppelbindungen.

In einer weiteren bevorzugten Ausführungsform umfasst die Komponente B) mindestens zwei Dienophileinheiten, die unabhängig voneinander ausgewählt sind aus der Gruppe bestehend aus C=C-Doppelbindungen, C=O-Doppelbindungen und C=S-Doppelbindungen, wobei die Doppelbindungen elektronenziehende Substituenten enthalten.

Elektronenziehende Substituenten sind dem Fachmann als solche bekannt. Beispiele für elektronenziehende Substituenten sind beispielsweise Carboxylgruppen, Estergruppen, Amide, Nitrile, Nitrogruppen, substituierte Aryle, Fluoralkyle und Fluor.

Dem Fachmann ist bekannt, dass durch die elektronenziehenden Substituenten die Reaktivität der reaktiven Gruppen des Dienophils gegenüber den Furaneinheiten erhöht wird.

In einer insbesondere bevorzugten Ausführungsform der vorliegenden Erfindung enthält die Komponente B) mindestens zwei Struktureinheiten, die jeweils ausgewählt sind aus der Gruppe bestehend aus Bismaleimid, Benzophenon, Acrylaten, Methacrylaten, Acrylonitrilen, Maleinsäure, Maleinsäureanhydrid und Maleinsäureestern. Am meisten bevorzugt enthält die Komponente B) mindestens ein Polymer, das mindestens zwei Struktureinheiten, die jeweils ausgewählt sind aus der Gruppe bestehend aus Bismaleimid, Benzophenon, Acrylaten, Methacrylaten, Acrylnonitrilen, Maleinsäure, Maleinsäureanhydrid und Maleinsäureestern.

Ein bevorzugtes Bismaleimid ist 4,4'-Diphenylmethanbismaleimid.

Gegenstand der vorliegenden Erfindung ist somit auch ein Verfahren, bei dem die Komponente B) mindestens zwei Struktureinheiten, die jeweils ausgewählt sind aus der Gruppe bestehend aus Bismaleimid, Benzophenon, Acrylaten, Methacrylaten, Acrylonitrilen, Maleinsäure, Maleinsäureanhydrid und Maleinsäureestern enthält.

### Komponente C)

In einer bevorzugten Ausführungsform enthält die Schmelze (S) zusätzlich als Komponente C) mindestens einen Endgruppenregler.

"Mindestens ein Endgruppenregler" bedeutet im Rahmen der vorliegenden Erfindung sowohl genau einen Endgruppenregler als auch eine Mischung aus zwei oder mehr Endgruppenreglern.

Endgruppenregler sind dem Fachmann als solche bekannt.

Es besteht die Vorstellung, dass der Endgruppenregler mit dem mindestens einen Polyamid (P) insbesondere mit den Aminendgruppen des mindestens einen Polyamids (P) reagiert, wodurch eine Umamidierung in der Schmelze (S) effektiv verhindert werden kann.

Geeignete Endgruppenregler sind beispielsweise Monocarbonsäuren, Monoamine, Benzolmonocarbonsäuren, Naphthalinmonocarbonsäuren, Benzolmonoamine, Naphthalinmonoamine oder Disäuren oder Anhydride, die mit Aminen Imide bilden.

Bevorzugt ist die Komponente C) ausgewählt aus der Gruppe bestehend aus Propionsäure, Benzoesäure, Naphtoesäure und Bernsteinsäureanhydrid.

Gegenstand der vorliegenden Erfindung ist somit auch ein Verfahren, bei dem die Komponente C) ausgewählt ist aus der Gruppe bestehend aus Propionsäure, Benzoesäure, Naphtoesäure und Bernsteinsäureanhydrid.

### Komponente D)

In einer weiteren bevorzugten Ausführungsform der Erfindung enthält die Schmelze (S) zusätzlich als Komponente D) mindestens einen Radikalfänger.

Unter "mindestens ein Radikalfänger" wird erfindungsgemäß sowohl genau ein Radikalfänger als auch eine Mischung aus zwei oder mehr Radikalfängern verstanden.

Radikalfänger sind dem Fachmann bekannt. Als Radikalfänger eignen sich beispielsweise alle Substanzen, die selbst Radikale sind und durch Reaktion mit anderen Radikalen diese abfangen, oder Substanzen, die bei Reaktionen mit einem Radikal selbst Radikale bilden, die stabil sind.

Bevorzugt ist die Komponente D) ausgewählt aus der Gruppe bestehend aus Kupfersalzen, aromatischen Aminen, sterisch gehinderten Aminen (HALS), sterisch gehinderten Phenolen, Phosphiten, 2,2,6,6-Tetramethylpiperidin-1-oxyl (TEMPO) und Derivaten von 2,2,6,6-Tetramethylpiperidin-1-oxyl (TEMPO). Diese Verbindungen sind dem Fachmann bekannt.

Gegenstand der vorliegenden Erfindung ist somit auch ein Verfahren, bei dem die Komponente D) ausgewählt ist aus der Gruppe bestehend aus Kupfersalzen, aromatischen Aminen, sterisch gehinderten Aminen (HALS), sterisch gehinderten Phenolen, Phosphiten, 2,2,6,6-Tetramethylpiperidin-1-oxyl (TEMPO) und Derivaten von 2,2,6,6-Tetramethylpiperidin-1-oxyl.

### Schritt ii)

In Schritt ii) wird die Schmelze (S) auf eine zweite Temperatur T₂, die unterhalb der Schmelztemperatur T_{M} der Komponente A) liegt, abgekühlt unter Erhalt des vernetzten Polyamids (vP). Die zweite Temperatur T₂ ist erfindungsgemäß niedriger als die erste Temperatur T₁.

Die zweite Temperatur T₂ liegt üblicherweise mindestens 1 °C unter der Schmelztemperatur T_{M} der Komponente A), bevorzugt mindestens 5 °C und insbesondere bevorzugt mindestens 10 °C unterhalb der Schmelztemperatur T_{M} der Komponente A).

In einer bevorzugten Ausführungsform weist die Komponente A) eine Glasübergangstemperatur T_{G} auf und die zweite Temperatur T₂ in Schritt ii) liegt oberhalb der Glasübergangstemperatur T_{G} der Komponente A).

Gegenstand der vorliegenden Erfindung ist somit auch ein Verfahren, bei dem die Komponente A) eine Glasübergangstemperatur T_{G} aufweist und die zweite Temperatur T₂ in Schritt ii) oberhalb der Glasübergangstemperatur T_{G} der Komponente A) liegt.

Üblicherweise liegt die zweite Temperatur T₂ in dieser Ausführungsform mindestens 1 °C, bevorzugt mindestens 5 °C und insbesondere bevorzugt mindestens 10 °C oberhalb der Glasübergangstemperatur T_{G} der Komponente A).

Bevorzugt liegt die zweite Temperatur T₂ in Schritt ii) im Bereich von 80 bis 300 °C, bevorzugt im Bereich von 90 bis 250 °C und insbesondere bevorzugt im Bereich von 100 bis 180 °C.

Gegenstand der vorliegenden Erfindung ist somit auch ein Verfahren, bei dem die zweite Temperatur T₂ in Schritt ii) im Bereich von 80 bis 300 °C liegt, wobei die zweite Temperatur T₂ kleiner als die erste Temperatur T₁ ist.

Es versteht sich von selbst, dass die erste Temperatur T₁ in Schritt i) größer ist als die zweite Temperatur T₂ in Schritt ii).

Gegenstand der vorliegenden Erfindung ist daher auch ein Verfahren, bei dem die erste Temperatur T₁ in Schritt i) größer ist als die zweite Temperatur T₂ in Schritt ii).

Zum Abkühlen der Schmelze (S) auf die zweite Temperatur T₂ eignen sich alle dem Fachmann bekannten Methoden. Beispielsweise kann die Schmelze (S) spritzgegossen werden und dabei in der Form abkühlen.

Das Abkühlen der Schmelze (S) in Schritt ii) kann innerhalb eines beliebigen Zeitraums erfolgen. Bevorzugt erfolgt das Abkühlen der Schmelze (S) in einem Zeitraum im Bereich von 0,1 Sekunden bis 5 Minuten, insbesondere bevorzugt im Bereich von 0,5 Sekunden bis 2 Minuten und am meisten bevorzugt im Bereich von 1 Sekunde bis 1 Minute.

Der Zeitraum des Abkühlens in Schritt ii) ist dabei die Zeit, die benötigt wird, um ausgehend von der ersten Temperatur T₁ die zweite Temperatur T₂ zu erreichen.

Beim Abkühlen der Schmelze (S) auf die zweite Temperatur T₂ wird das vernetzte Polyamid (vP) erhalten.

Das vernetzte Polyamid (vP) wird vorzugsweise dadurch erhalten, dass die Komponente A) mit der Komponente B) in einer [4+2]-Cycloaddition reagiert. [4+2]-Cycloadditionen sind dem Fachmann als solche bekannt. Sie werden auch als Diels-Alder-Reaktionen bezeichnet.

Gegenstand der vorliegenden Erfindung ist somit auch ein Verfahren, bei dem in Schritt ii) die Komponente A) mit der Komponente B) in einer [4+2]-Cycloaddition reagiert, unter Erhalt des vernetzten Polyamids (vP).

Bei der [4+2]-Cycloaddition wird das Dienophil mit seiner gegenüber den in der Komponente A) enthaltenen Furaneinheiten reaktiven Dienophileinheiten, also vorzugsweise mit der C=C-Doppelbindung, der C=O-Doppelbindung oder der C=S-Doppelbindung an die Furaneinheit (Dieneinheit) addiert. Dadurch bildet sich ein Cyclohexenderivat. Diese Reaktion ist dem Fachmann als solche bekannt.

Nach Schritt ii) kann ein weiterer Schritt, Schritt iii), folgen. Üblicherweise wird das vernetzte Polyamid (vP) dann zunächst auf eine dritte Temperatur T₃, die unterhalb der Glasübergangstemperatur T_{G} der Komponente A) liegt, abgekühlt. Anschließend wird das vernetzte Polyamid (vP) auf eine vierte Temperatur T₄, die oberhalb der Glasübergangstemperatur T_{G} der Komponente A) und unterhalb der Schmelztemperatur T_{M} der Komponenente A) liegt, erwärmt. Für die vierte Temperatur T₄ gelten die gleichen Ausführungen und Bevorzugungen wie für die zweite Temperatur T₂.

Nach Schritt ii) und/oder gegebenenfalls nach Schritt iii) wird das vernetzte Polyamid (vP) üblicherweise auf Raumtemperatur (20 °C) abgekühlt.

### Vernetztes Polyamid (vP)

In Schritt ii) wird das vernetzte Polyamid (vP) erhalten. Das vernetzte Polyamid (vP) enthält Baueinheiten, die von der Komponente A), der Komponente B) sowie gegebenenfalls den Komponenten C) und D) abgeleitet werden können. Es versteht sich von selbst, dass durch die Reaktion der Komponente A) mit der Komponente B) in Schritt ii) die in dem mindestens einem Polyamid (P) enthaltenen Dieneinheiten (Furaneinheiten) zumindest teilweise verändert werden. Ebenso ändern sich die Strukturen der Komponente B) sowie gegebenenfalls der Komponenten C) und D).

Diese Reaktionen sind dem Fachmann als solche bekannt.

Das gewichtsmittlere Molekulargewicht (M_{w}) des vernetzten Polyamids (vP) liegt üblicherweise im Bereich von 40.000 bis 300.000 g/mol, bevorzugt im Bereich von 60.000 bis 280.000 g/mol und insbesondere bevorzugt im Bereich von 70.000 bis 240.000 g/mol, bestimmt mittels Gelpermeationschromatographie (GPC) (size exclusion chromatography (SEC)). Als Lösungsmittel wurde Hexafluorisopropanol (HFIP) verwendet.

Das zahlenmittlere Molekulargewicht (Mₙ) des vernetzten Polyamids (vP) liegt üblicherweise im Bereich von 5000 bis 75.000 g/mol, bevorzugt im Bereich von 8000 bis 70.000 g/mol und insbesondere bevorzugt im Bereich von 10.000 bis 60.000 g/mol auf, bestimmt mittels Gelpermeationschromatographie (GPC) (size exclusion chromatography (SEC)). Als Lösungsmittel wurde Hexafluorisopropanol (HFIP) verwendet.

Gegenstand der vorliegenden Erfindung ist auch ein vernetztes Polyamid (vP), erhältlich nach dem erfindungsgemäßen Verfahren.

Das erfindungsgemäß hergestellte vernetzte Polyamid (vP) kann beispielsweise eingesetzt werden zur Herstellung von Formteilen durch Spritzgussverfahren, Extrusionsverfahren, 3-D-Drucke und Rotationsformen.

Nachfolgend wird das erfindungsgemäße Verfahren durch Beispiele näher erläutert, ohne sich hierauf zu beschränken.

### Beispiele

In den Beispielen wurden die folgenden Komponenten eingesetzt:
A) PA 6/F6 (80/20) (w/w), Copolymer aus Caprolactam (80 Gew.-%) mit 2,5-Bis(aminomethyl)furan und Adipinsäure (zusammen 20 Gew.-%).
A') PA 6 mit einer relativen Viskosität in 1 % H₂SO₄ von 2,2 (Ultramid B22, BASF SE)
B1) Bis(maleimidophenyl)methan (CAS 13676-54-5)
B2) Bis(3-Ethyl-5-methyl-4-maleimidophenylmethan) (CAS 105391-33-1)
B3) *N*,*N*'-1,3-Bis(maleimido)benzol (CAS 3006-93-7)
C) Bernsteinsäureanhydrid (CAS 108-30-5)
D) 4-Hydroxy-TEMPO (2226-96-2)

### Herstellung der vernetzten Polyamide (vP)

Die vernetzten Polyamide (vP) wurden in einem DSM-Miniextruder mit konischer Doppelschnecke und angeschlossenem Spritzguss hergestellt. Dazu wurde die Schmelze aus der Komponente A) und/oder A') sowie gegebenenfalls den Komponenten B1), B2), B3), C) und D) bei 230°C bereitgestellt und für 5 Minuten gemischt. Anschließend wurden Zugstäbe (Type 1 nach ISO 37:2011 (E)) hergestellt durch Spritzguss, wobei die Schmelze (S) gemäß Schritt ii) abgekühlt wurde. Die Werkzeugtemperatur (entspricht der zweiten Temperatur T₂), die Extrudertemperatur (entspricht der ersten Temperatur T₁), der Druck und die Dauer sind in Tabelle 1 angegeben.

### Charakterisierung der vernetzten Polyamide (vP)

Die in Tabelle 1 angegebenen Eigenschaften der vernetzten Polyamide (vP) wurden wie folgt bestimmt:
- Gewichtsmittleres Molekulargewicht M_{w}; zahlenmittleres Molekulargewicht Mₙ: Gemessen nach Filtration über Millipore Millex FG (0,2 µm) Filter in Hexafluoroisopropanol + 0,05 % Trifluoressigsäure Kaliumsalz auf einer Styrol-Divinylbenzol Säule mit PMMA Standard von 0,8 kDa bis 1820 kDa. Messung bei 35 °C mit 1 mL/min Durchflussgeschwindigkeit und 1,5 mL/mg Probenkonzentration
- VZ (Viskositätszahl): 0,5 g/ml Polymer wurden in Phenol/ortho-Dichlorbenzol (1:1) gelöst und anschließend die Viskositätszahl bestimmt (nach ISO 307)
- E-Modul (Elastizitätsmodul): gemessen nach ISO 527-2 (2012)
- Streckspannung: gemessen nach ISO 527-2 (2012)
- Streckdehnung: gemessen nach ISO 527-2 (2012)
- Bruchspannung: gemessen nach ISO 527-2 (2012)
- Fließverhalten (Rheologie): Gemessen bei 230 °C an einem Rotationstheometer "DHR-1" der Firma TA-Instruments mit Platte-Platte Geometrie (Durchmesser 25 mm, Höhe ∼ 1,0 mm - 1,6 mm). Vorheizzeit 1,5 min und 1,0 % Deformation im frequency sweep und 10 % Deformation im time-sweep). Das Verlustmodul und das Speichermodul wurden bestimmt. Vor der Messung wurden die Proben 7 Tage bei 80 °C im Vakuum getrocknet.
- tan δ: Zur Ermittlung des Tan δ (Verlustfaktors) wurde das Verhältnis von Verlustmodul zu Speichermodul bestimmt, wobei der Verlustmodul und der Speichermodul mittels Rheologie bestimmt wurde.

**Tabelle 1**

| | **V1** | **2** | **3** | **4** | **5** | **V6** | **7** | **8** | **V11** |
|---|---|---|---|---|---|---|---|---|---|
| A) | 98,3% | 97,3% | 96,3% | 94,3% | 92,3% | | 94,3% | 94,3% | 100% |
| A') | | | | | | 94,3% | | | |
| B1) | | 1,0% | 2,0% | 4,0% | 6,0% | 4,0% | | | |
| B2) | | | | | | | 4,0% | | |
| B3) | | | | | | | | 4,0% | |
| C) | 1,0% | 1,0% | 1,0% | 1,0% | 1,0% | 1,0% | 1,0% | 1,0% | |
| D) | 0,7% | 0,7% | 0,7% | 0,7% | 0,7% | 0,7% | 0,7% | 0,7% | |
| | | | | | | | | | |
| VZ | 58,1 | 73,3 | 81,4 | 86,3 | 87,9 | 113,5 | 95,2 | 105,1 | 98,2 |
| | | | | | | | | | |
| E-Modul [MPa] | 2274 | 3153 | 3316 | 3237 | 3238 | 3026 | 3330 | 3336 | 2108 |
| | | | | | | | | | |
| Streckpannung [MPa] | 70,96 | 93,54 | 96,19 | 95,33 | 95,03 | 85 | 97,47 | 96,15 | 73,46 |
| Streckdehnung [%] | 3,39 | 3,68 | 3,64 | 3,73 | 3,75 | 3,97 | 3,75 | 3,67 | 3,78 |
| | | | | | | | | | |
| | | | | | | | | | |
| Bruchspannung [MPa] | 62,01 | 61,02 | 78,06 | 76,62 | 75,22 | 67,25 | 77,83 | 77,96 | 63,24 |
| | | | | | | | | | |
| | | | | | | | | | |
| M_{w} [g/mol] (GPC) | | | 88.000 | | | | | | 47.800 |
| Mₙ [g/mol] (GPC) | | | 12.300 | | | | | | 16.700 |
| tan δ [10 rad/s] nach 30 Minuten | 8,98 | 2,11 | 1,27 | 0,7 | | | | | 10,7 |
| Löslichkeit der Probe in 96% H₂SO₄ nach der Rheologie Messung. (30min, 210°C) (T(H₂SO₄) = 23°C) | ja | nein | nein | nein | | | | | |
| Löslichkeit der Probe in 96% H₂SO₄ nach der (30min, 210°C) (T(H₂SO₄) = 100°C) | ja | ja | ja | ja | | | | | |
| | | | | | | | | | |

| Spritzguss: | | | | | | | | | |
|---|---|---|---|---|---|---|---|---|---|
| Werkzeugtemperatur [°C] | 60 | 55 | 55 | 55 | 55 | 55 | 55 | 55 | 55 |
| Extrudertemperatur [°C] | 230 | 230 | 230 | 230 | 230 | 230 | 230 | 230 | 230 |
| Druck [bar] | 8 | 10 | 10 | 12 | 12 | 9 | 12 | 12 | 12 |
| Dauer [s] | 9 | 9 | 9 | 9 | 9 | 9 | 9 | 9 | 9 |

Die erfindungsgemäß hergestellten vernetzten Polyamide (vP) zeichnen sich durch ein besonders hohes E-Modul, eine besonders hohe Streckspannung, eine hohe Bruchspannung, eine hohe Streckdehnung und eine reduzierte Löslichkeit in Schwefelsäure aus.

## Patentansprüche

1. Verfahren zur Herstellung eines vernetzten Polyamids (vP), umfassend die Schritte
i) Bereitstellen einer Schmelze (S), die die Komponenten
A) mindestens ein Polyamid (P) mit einer Schmelztemperatur T_{M}, das Dieneinheiten der allgemeinen Formel (I) 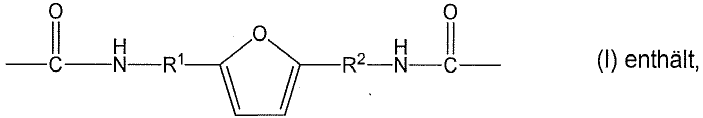 in der
R¹, R² unabhängig voneinander ausgewählt sind aus C₁-C₁₀-Alkandiyl,
B) mindestens ein Dienophil, das mindestens zwei Dienophileinheiten enthält, die gegenüber den in der Komponente A) enthaltenen Dieneinheiten reaktiv sind,
enthält, bei einer ersten Temperatur T₁, die oberhalb der Schmelztemperatur T_{M} der Komponente A) liegt,
ii) Abkühlen der Schmelze (S) auf eine zweite Temperatur T₂, die unterhalb der Schmelztemperatur T_{M} der Komponente A) liegt, unter Erhalt des vernetzten Polyamids (vP).

2. Verfahren gemäß Anspruch 1, **dadurch gekennzeichnet, dass** in Schritt ii) die Komponente A) mit der Komponente B) in einer [4+2]-Cycloaddition reagiert, unter Erhalt des vernetzten Polyamids (vP).

3. Verfahren gemäß Anspruch 1 oder 2, **dadurch gekennzeichnet, dass** die Komponente A) eine Glasübergangstemperatur T_{G} aufweist und die zweite Temperatur T₂ in Schritt ii) oberhalb der Glasübergangstemperatur T_{G} der Komponente A) liegt.

4. Verfahren gemäß einem der Ansprüche 1 bis 3, **dadurch gekennzeichnet, dass** die erste Temperatur T₁ in Schritt i) im Bereich von 90 bis 380 °C liegt.

5. Verfahren gemäß einem der Ansprüche 1 bis 4, **dadurch gekennzeichnet, dass** die zweite Temperatur T₂ in Schritt ii) im Bereich von 80 bis 300 °C liegt, wobei die zweite Temperatur T₂ kleiner als die erste Temperatur T₁ ist.

6. Verfahren gemäß einem der Ansprüche 3 bis 5, **dadurch gekennzeichnet, dass** die Glasübergangstemperatur T_{G} der Komponente A) im Bereich von 0 bis 150 °C liegt.

7. Verfahren gemäß einem der Ansprüche 1 bis 6, **dadurch gekennzeichnet, dass** die Schmelztemperatur T_{M} der Komponente A) im Bereich von 80 bis 330 °C liegt.

8. Verfahren gemäß einem der Ansprüche 1 bis 7, **dadurch gekennzeichnet, dass** die in der Komponente B) enthaltenen mindestens zwei Dieneinheiten, die unabhängig voneinander ausgewählt sind aus der Gruppe bestehend aus C=C-Doppelbindungen, C=O-Doppelbindungen und C=S-Doppelbindungen.

9. Verfahren gemäß einem der Ansprüche 1 bis 8, **dadurch gekennzeichnet, dass** die Komponente B) mindestens zwei Struktureinheiten, die jeweils ausgewählt sind aus der Gruppe bestehend aus Bismaleimid, Benzophenon, Acrylaten, Methacrylaten, Acrylonitrilen, Maleinsäure, Maleinsäureanhydrid und Maleinsäureestern enthält.

10. Verfahren gemäß einem der Ansprüche 1 bis 9, **dadurch gekennzeichnet, dass** die Schmelze (S) zusätzlich als Komponente C) im Bereich von 0 bis 2 Gew.-% mindestens eines Endgruppenreglers enthält, bezogen auf die Summe der Gew.-% der in der Schmelze (S) enthaltenen Komponenten A), B) und C).

11. Verfahren gemäß Anspruch 10, **dadurch gekennzeichnet, dass** die Komponente C) ausgewählt ist aus der Gruppe bestehend aus Propionsäure, Benzoesäure, Naphtoesäure und Bernsteinsäureanhydrid.

12. Verfahren gemäß einem der Ansprüche 1 bis 11, **dadurch gekennzeichnet, dass** die Schmelze (S) zusätzlich als Komponente D) im Bereich von 0,5 bis 5 Gew.-% mindestens eines Radikalfängers enthält, bezogen auf das Gesamtgewicht der in der Schmelze (S) enthaltenen Komponenten A), B), C) und D).

13. Verfahren gemäß Anspruch 12, **dadurch gekennzeichnet, dass** die Komponente D) ausgewählt ist aus der Gruppe bestehend aus Kupfersalzen, aromatischen Aminen, sterisch gehinderten Aminen (HALS), sterisch gehinderten Phenolen, Phosphiten, 2,2,6,6-Tetramethylpiperidin-1-oxyl (TEMPO) und Derivaten von 2,2,6,6-Tetramethylpiperidin-1-oxyl.

14. Verfahren gemäß einem der Ansprüche 1 bis 13, **dadurch gekennzeichnet, dass** die Schmelze (S) die folgenden Komponenten enthält:
A) von 83 bis 99 Gew.-% der Komponente A),
B) von 0,5 bis 10 Gew.-% der Komponente B),
C) von 0 bis 2 Gew.-% mindestens eines Endgruppenreglers,
D) von 0,1 bis 5 Gew.-% mindestens eines Radikalfängers,
jeweils bezogen auf die Summe der Gew.-% der in der Schmelze (S) enthaltenen Komponenten A) bis D).

15. Vernetztes Polyamid (vP) erhältlich nach einem Verfahren der Ansprüche 1 bis 14.

## Claims

1. A process for preparing a crosslinked polyamide (vP), comprising the steps of
i) providing a melt (S) which comprises components
A) at least one polyamide (P) having a melting temperature T_{M} and comprising diene units of the general formula (I) 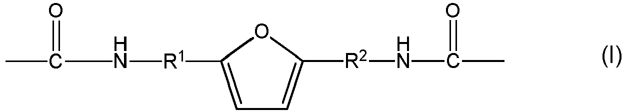 in which
R¹ and R² independently of one another are selected from C₁-C₁₀ alkanediyl,
B) at least one dienophile which comprises at least two dienophile units which are reactive toward the diene units present in component A),
at a first temperature T₁ which is above the melting temperature T_{M} of component A),
ii) cooling the melt (S) to a second temperature T₂ which is below the melting temperature T_{M} of component A), to give the crosslinked polyamide (vP).

2. The process according to claim 1, wherein component A) reacts with component B) in step ii) in a [4+2]-cycloaddition to give the crosslinked polyamide (vP).

3. The process according to claim 1 or 2, wherein component A) has a glass transition temperature T_{G} and the second temperature T₂ in step ii) is above the glass transition temperature T_{G} of component A).

4. The process according to any of claims 1 to 3, wherein the first temperature T₁ in step i) is in the range from 90 to 380°C.

5. The process according to any of claims 1 to 4, wherein the second temperature T₂ in step ii) is in the range from 80 to 300°C, the second temperature T₂ being lower than the first temperature T₁.

6. The process according to any of claims 3 to 5, wherein the glass transition temperature T_{G} of component A) is in the range from 0 to 150°C.

7. The process according to any of claims 1 to 6, wherein the melting temperature T_{M} of component A) is in the range from 80 to 330°C.

8. The process according to any of claims 1 to 7, wherein the at least two diene units present in component B) are selected independently of one another from the group consisting of C=C double bonds, C=O double bonds, and C=S double bonds.

9. The process according to any of claims 1 to 8, wherein component B) comprises at least two structural units each selected from the group consisting of bismaleimide, benzophenone, acrylates, methacrylates, acrylonitriles, maleic acid, maleic anhydride, and maleic esters.

10. The process according to any of claims 1 to 9, wherein the melt (S) additionally comprises as component C) in the range from 0 to 2 wt% of at least one endgroup regulator, based on the sum of the wt% of the components A), B), and C) present in the melt (S).

11. The process according to claim 10, wherein component C) is selected from the group consisting of propionic acid, benzoic acid, naphthoic acid, and succinic anhydride.

12. The process according to any of claims 1 to 11, wherein the melt (S) additionally comprises as component D) in the range from 0.5 to 5 wt% of at least one radical scavenger, based on the total weight of the components A), B), C), and D) present in the melt (S).

13. The process according to claim 12, wherein component D) is selected from the group consisting of copper salts, aromatic amines, sterically hindered amines (HALS), sterically hindered phenols, phosphites, 2,2,6,6-tetramethylpiperidine-1-oxyl (TEMPO) and derivatives of 2,2,6,6-tetramethylpiperidine-1-oxyl.

14. The process according to any of claims 1 to 13, wherein the melt (S) comprises the following components:
A) from 83 to 99 wt% of component A),
B) from 0.5 to 10 wt% of component B),
C) from 0 to 2 wt% of at least one endgroup regulator,
D) from 0.1 to 5 wt% of at least one radical scavenger,
based in each case on the sum of the wt% of the components A) to D) present in the melt (S).

15. A crosslinked polyamide (vP) obtainable by a process of claims 1 to 14.

## Revendications

1. Procédé de fabrication d'un polyamide réticulé (vP), comprenant les étapes suivantes :
i) la préparation d'une masse fondue (S), qui contient les composants suivants :
A) au moins un polyamide (P) ayant une température de fusion T_{M}, qui contient des unités diéniques de formule générale (I) 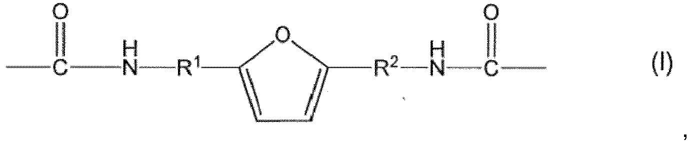 dans laquelle
R¹, R² sont choisis indépendamment l'un de l'autre parmi alcane-diyle en C₁-C₁₀, B) au moins un diénophile, qui contient au moins deux unités diénophiles, qui sont réactives avec les unités diéniques contenues dans le composant A),
à une première température T₁, qui se situe au-dessus de la température de fusion T_{M} du composant A),
ii) le refroidissement de la masse fondue (S) à une deuxième température T₂, qui se situe en dessous de la température de fusion T_{M} du composant A), pour obtenir le polyamide réticulé (vP).

2. Procédé selon la revendication 1, **caractérisé en ce qu'**à l'étape ii), le composant A) réagit avec le composant B) par une cycloaddition [4+2], pour obtenir le polyamide réticulé (vP).

3. Procédé selon la revendication 1 ou 2, **caractérisé en ce que** le composant A) présente une température de transition vitreuse T_{G} et la deuxième température T₂ à l'étape ii) se situe au-dessus de la température de transition vitreuse T_{G} du composant A).

4. Procédé selon l'une quelconque des revendications 1 à 3, **caractérisé en ce que** la première température T₁ à l'étape i) se situe dans la plage allant de 90 à 380 °C.

5. Procédé selon l'une quelconque des revendications 1 à 4, **caractérisé en ce que** la deuxième température T₂ à l'étape ii) se situe dans la plage allant de 80 à 300 °C, la deuxième température T₂ étant inférieure à la première température T₁.

6. Procédé selon l'une quelconque des revendications 3 à 5, **caractérisé en ce que** la température de transition vitreuse T_{G} du composant A) se situe dans la plage allant de 0 à 150 °C.

7. Procédé selon l'une quelconque des revendications 1 à 6, **caractérisé en ce que** la température de fusion T_{M} du composant A) se situe dans la plage allant de 80 à 330 °C.

8. Procédé selon l'une quelconque des revendications 1 à 7, **caractérisé en ce que** lesdites au moins deux unités diéniques contenues dans le composant B) sont choisies indépendamment l'une de l'autre dans le groupe constitué par les doubles liaisons C=C, les doubles liaisons C=O et les doubles liaisons C=S.

9. Procédé selon l'une quelconque des revendications 1 à 8, **caractérisé en ce que** le composant B) contient au moins deux unités structurales, qui sont chacune choisies dans le groupe constitué par le bismaléimide, la benzophénone, les acrylates, les méthacrylates, les acrylonitriles, l'acide maléique, l'anhydride de l'acide maléique et les esters de l'acide maléique.

10. Procédé selon l'une quelconque des revendications 1 à 9, **caractérisé en ce que** la masse fondue (S) contient en outre en tant que composant C) dans la plage allant de 0 à 2 % en poids d'au moins un régulateur de groupes terminaux, par rapport à la somme des % en poids des composants A), B) et C) contenus dans la masse fondue (S).

11. Procédé selon la revendication 10, **caractérisé en ce que** le composant C) est choisi dans le groupe constitué par l'acide propionique, l'acide benzoïque, l'acide naphtoïque et l'anhydride de l'acide succinique.

12. Procédé selon l'une quelconque des revendications 1 à 11, **caractérisé en ce que** la masse fondue (S) contient en outre en tant que composant D) dans la plage allant de 0,5 à 5 % en poids d'au moins un capteur de radicaux, par rapport au poids total des composants A), B, C) et D) contenus dans la masse fondue (S).

13. Procédé selon la revendication 12, **caractérisé en ce que** le composant D) est choisi dans le groupe constitué par les sels de cuivre, les amines aromatiques, les amines à encombrement stérique (HALS), les phénols à encombrement stérique, les phosphites, le 2,2,6,6-tétraméthylpipéridine-1-oxyle (TEMPO) et les dérivés de 2,2,6,6-tétraméthylpipéridine-1-oxyle.

14. Procédé selon l'une quelconque des revendications 1 à 13, **caractérisé en ce que** la masse fondue (S) contient les composants suivants :
A) de 83 à 99 % en poids du composant A),
B) de 0,5 à 10 % en poids du composant B),
C) de 0 à 2 % en poids d'au moins un régulateur de groupes terminaux,
D) de 0,1 à 5 % en poids d'au moins un capteur de radicaux,
à chaque fois par rapport à la somme des % en poids des composants A) à D) contenus dans la masse fondue (S).

15. Polyamide réticulé (vP) pouvant être obtenu par un procédé selon les revendications 1 à 14.
